# EUROPEAN PATENT SPECIFICATION

(11) **EP 3 929 498 B1**
(45) Date of publication and mention of the grant of the patent: **10.04.2024**
(21) Application number: 20759706.3
(22) Date of filing: 22.01.2020
(51) Int. Cl.: F24F 11/00, F24F 11/72, F24F 7/013, F24F 11/64, F24F 11/61, F24F 11/30, F04D 25/08, F04D 25/12, F04D 27/00

(54) **SMART AIR EXTRACTOR**
INTELLIGENTER LUFTABSAUGER
EXTRACTEUR D'AIR INTELLIGENT

(30) Priority: 19.02.2019 ES 201930139
(43) Date of publication of application: 29.12.2021
(73) Proprietor: Soler & Palau Research, S.L., 08150 Parets Del Vallés (Barcelona) (ES)
(72) Inventor: BACH-ESTEVE BURCH, Albert, 08150 Parets Del Vallés (Barcelona) (ES)
(74) Representative: Cabinet Beau de Loménie
(86) International application number: PCT/ES2020/070047
(87) International publication number: WO 2020/169857

(56) References cited:
- WO-A1-2004/111547
- WO-A1-2015/150928
- WO-A2-2015/091572
- ES-U- 1 225 490
- GB-A- 2 521 217
- IT-A1- UA20 161 876
- JP-A- H06 185 768
- US-A1- 2017 299 212
- US-A1- 2018 017 273
- US-A1- 2018 259 211

## Description

### Technical field

The present invention refers to an air extractor with improved control electronics which enables the electrical consumption of the air extractor to be optimised depending on the environmental and occupancy conditions of the enclosed space wherein the extractor is installed.

### State of the art

For the renewal of stale or contaminated air in enclosed spaces, such as bathrooms or kitchens, it is known to use extractors which absorb the air from inside the enclosed space and expel it to the outside through an exhaust duct to which the extractors are connected.

The air extractors comprise a propeller for suctioning air from the enclosed space and a motor for rotating the propeller, the drive motor being controlled in the operation thereof by a control unit.

The simplest control unit is based on a manual switch which only commands the activation and deactivation of the motor, rotating the propeller according to a previously established fixed rotation speed of the motor. Generally, this switch corresponds to the switch that controls the activation and deactivation of the light of the enclosed space wherein the extractor is installed. Accordingly, the extractor only operates when the light of the enclosed space is activated and according to the fixed rotation speed, not taking into account the occupancy and humidity conditions of the enclosed space, which does not result in an optimal operation of the extractor, since for example, the light can stay activated with the extractor operating without anyone in the enclosed space, or the light can stay deactivated and therefore also the extractor when the humidity has not been removed from the enclosed space. Furthermore, in the installation, it is necessary to build a channel in order to carry the wiring from the existing switch in the enclosed space to the air extractor.

Air extractors are also known, from instance from US 2018/259211 A1 or US 2018/017273 A1, which are provided with presence detection means in order to determine the occupancy conditions of the enclosed space, or air extractors provided with humidity detection means in order to determine the ambient humidity conditions of the enclosed space. These extractors have an optimised operation with respect to the air extractors described previously, however, they have some limitations that need to be corrected.

The presence detection means are usually based on an infrared sensor which generates a signal to activate the motor of the air extractor when it detects the presence of a user inside the enclosed space. When the user leaves the enclosed space, the extractor, after a time delay, is deactivated, it being possible for the environmental conditions of the enclosed space to not be suitable, for example, the user may have finished showering without having completely removed the humidity from the enclosed space.

The humidity detection means are usually based on humidity sensors which generate a signal to activate the motor of the air extractor when they detect the presence of humidity in the enclosed space. In this case, the extractor is only activated when certain humidity conditions occur, however, even if there is no humidity, there may be unsuitable environmental conditions in the enclosed space which require ventilation, such as, for example, bad odours. Moreover, in certain geographical locations, for example, in excessively humid areas, such as near the sea, the environmental humidity conditions can be such that the air extractor could be permanently in operation, with the electrical overconsumption that this entails.

Therefore, an air extractor is necessary with an improved control unit which enables the operation of the extractor to be adapted to the environmental and occupancy conditions of the enclosed space wherein it is installed.

### Object of the invention

According to the present invention, a smart air extractor according to claim 1 is proposed, which enables the electrical consumption of the air extractor to be optimised depending on the environmental and occupancy conditions of the enclosed space wherein it is installed.

Accordingly, the control unit enables the activation and deactivation of the motor to be controlled, as well as the rotation speed thereof to be regulated, all of this based on the control signals generated by the presence detection and air-quality measuring means, thereby optimising the electrical consumption of the air extractor, since the operation thereof adapts to the specific ventilation demand of the enclosed space wherein it is installed, according to the specific environmental and occupancy conditions of the enclosed space.

With all of this, the air extractor object of the invention has very advantageous features for the function for which it is intended, acquiring a life of its own and a preferential character with respect to other conventional air extractors used for that function.

The main advantages of the extractor of the invention are listed below:
- Neither too little nor excessive air extraction, at all times adjusted to the ventilation needs according to the degree of contamination of the inner air of the enclosed space.
- Lower average noise level because the extractor will operate at an intermediate speed most of the time compared to a conventional extractor, the operation of which is always at the maximum speed.
- Greater comfort. Both having suitable ventilation at all times and the lower noise level result in greater comfort for the user.
- Energy savings due to preventing excessive air extractions, the savings are produced both by a lower consumption of the extractor itself and, above all, by saving on air conditioning of the intake air.
- It uses two electrical wires. Conventional extractors require the arrival of three electrical wires to the extractor, in this case there are only two, which is important when there are only two wires if replacing an obsolete extractor.

### Description of the figures

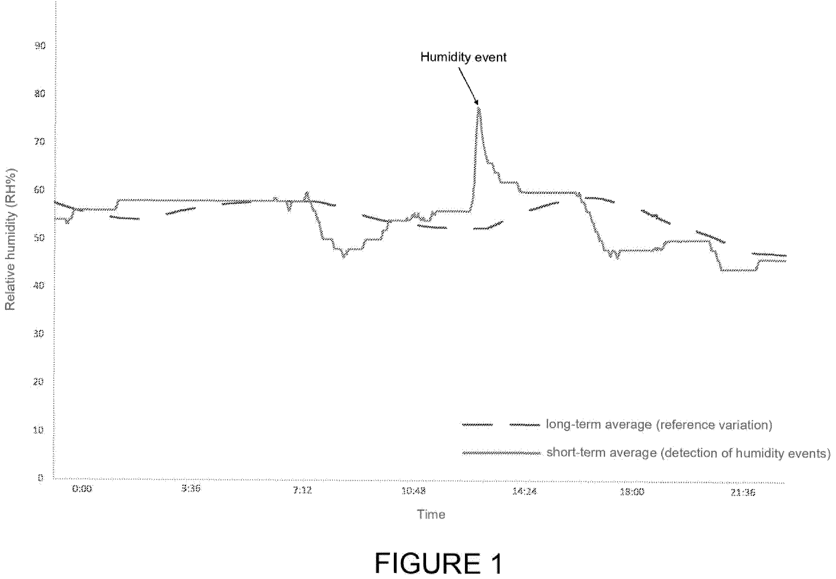

Figure 1 shows a graph with the temporal evolution of the relative humidity in a bathroom, wherein a long-term moving average and a short-term moving average of the humidity are compared in order to detect an event in the bathroom.

### Detailed description of the invention

The air extractor proposed by the invention comprises a propeller for suctioning air from an enclosed space wherein the extractor is installed, such as for example a bathroom or a kitchen, and a motor for rotating the propeller, the propeller being joined to the drive shaft of the motor.

The air extractor comprises presence detection means to generate a first control signal when a user is present in the enclosed space, air-quality measuring means to generate a second control signal when an environmental parameter of the enclosed space exceeds a reference environmental parameter, and a control unit configured to command the activation and deactivation of the motor and to regulate the rotation speed of the propeller of the motor according to the control signals generated by the presence detection means and the air-quality measuring means.

Preferably, the air-quality measuring means are one or more sensors for measuring volatile organic compounds (VOC), humidity, or carbon dioxide, such that different environmental parameters representative of the environmental conditions of the enclosed space wherein the extractor is installed can be measured.

The measured environmental parameters are for example the relative humidity in the enclosed space, the concentration of carbon dioxide, and/or the concentration of volatile organic compounds.

The air extractor further comprises a timer, the control unit being additionally configured to maintain the motor activated for a predefined time which is established by the timer.

The control unit is configured with a control algorithm which enables the operation of the motor to be regulated according to four operating states which are activated depending on the control signals generated by the presence detection means and the air-quality measuring means.

The first operating state corresponds to the motor of the deactivated air extractor such that in said state the electrical consumption of the motor of the air extractor is eliminated and the noise produced by the extractor is eliminated when the environmental and occupancy conditions of the enclosed space are such that they do not require ventilation.

The first operating state is activated when the presence detection means do not detect the presence of a user in the enclosed space and when the environmental parameter measured by the air-quality measuring means is below the reference environmental parameter. In this case, the motor is maintained deactivated.

In some enclosed spaces, the usual occupancy conditions and use of the enclosed space may make it advisable to maintain the extractor operating permanently. According to this, optionally, said first operating state can correspond to the motor operating at a minimum rotation speed of the propeller. For example, the minimum speed corresponds to approximately 30% of the maximum rotation speed of the propeller. Accordingly, the first operating state corresponds to the motor of the air extractor deactivated or operating at the minimum rotation speed of the propeller.

The second operating state corresponds to the motor operating at a variable rotation speed of the propeller, said variable speed being a function of the quality of the air in the enclosed space.

The second operating state is activated when the detection means do not detect the presence of a user in the enclosed space and when the environmental parameter measured by the air-quality measuring means is above the reference environmental parameter. In this case, the rotation speed of the propeller will be a function of the measured environmental parameter. This may be the case wherein a user has been showering and has left the enclosed space when the humidity has not been removed, such that the rotation speed of the propeller will be a function of the relative humidity existing in the enclosed space.

The third operating state is activated when the presence detection means detect the presence of a user.

In this third operating state, the air extractor can be maintained operating at a fixed rotation speed of the propeller, for example approximately 70% of the maximum rotation speed of the propeller. This third operating state is maintained by time delay starting from the last presence detection performed by the presence detector.

The fourth operating state is activated when the environmental parameter measured by the air-quality measuring means is above the reference environmental parameter and has reached that point by means of a quick variation of a short-term average (the operation of which will be explained later).

In this fourth operating state, the air extractor can be maintained operating at the maximum rotation speed of the propeller. This may be the case wherein a user is showering and a full operation of the air extractor is necessary. The fourth operating state is maintained active as long as the air-quality measuring means continue to detect that the measured environmental parameter is above the reference environmental parameter.

The control unit together with both the presence detection and the air-quality measuring means enable detecting slow changes in the environmental conditions due to, for example, rain or fog, as well as quick changes in the environmental conditions due to, for example, the use of the enclosed space by a user, such as showers, or uses of the bathroom, which results in an optimal electrical consumption of the air extractor.

The control unit additionally comprises a memory for storing the environmental parameters of the enclosed space measured by the air-quality measuring means, the control unit being additionally configured to obtain the reference environmental parameter depending on the environmental parameters of the enclosed space measured by the air-quality measuring means.

For example, the reference environmental parameter is modified depending on the average of the sum of the environmental parameters measured during a certain time.

In this manner, the air extractor is capable of detecting lasting environmental changes of the enclosed space, such as being near the sea or in drier areas, thus modifying the reference environmental parameter in order to adapt the operation of the air extractor to the enclosed space wherein it is installed.

With all this, the algorithm of the control unit enables it to be determined if an increase in the humidity is due to a variation in the general environment wherein the extractor is arranged or, on the contrary, if this variation is due to an event which is happening inside the enclosed space or bathroom.

The algorithm takes data from the humidity parameter of the bathroom, saves it, and then calculates a long-term moving average and a short-term moving average.

The short-term moving average is calculated by taking values of the environmental parameter over a short period of time (several minutes) preceding the current moment, while the long-term moving average is calculated by taking values of the environmental parameter over a long period of time (several hours) preceding the current moment. Thus, the long-term average corresponds to the variation of the reference environmental parameter, and the short-term average corresponds practically to real-time measurements of the air-quality sensor.

The long-term average helps the algorithm determine and position itself with respect to the environmental "climate" wherein the extractor is located. The long-term average corresponds to the "base" humidity, and constitutes the value which the algorithm takes as a reference, thus being an adaptive reference. This adaptive reference is not only adapted according to the climate of the area wherein the extractor is installed, but also with respect to seasonal variations throughout the year. The fact of having this adaptive reference prevents the extractor from staying in continuous operation in humid areas, thus, the algorithm automatically increases the reference in those humid areas.

Figure 1 shows a graph with the temporal evolution of the long-term average, represented in dashes, and the short-term average.

From the comparative evolution between the long and short-term averages, the algorithm is able to identify the events which occur inside the bathroom. In a simplified manner, a quick increase in the short-term average with respect to the long-term average will be identified as an event, while slow variations of the short-term average with respect to the long-term average will be considered as an environmental variation (climate) and not an event.

The response of the algorithm (speed of the extractor) will be one or the other depending on whether it is an event or an environmental variation.

In the following table you can see the response that the algorithm gives to the detections of the presence sensor and to the detections of the IAQ air-quality sensor, depending on whether they are slow or quick variations of the short-term average.

| Sensor | State of the sensor | Speed (S) | Operating state |
|---|---|---|---|
| Presence | Active | 60% < Maximum S < 100% | 3rd State |
| | Deactivated | S = 0 or minimum S | 1st State |
| IAQ | Deactivated | S = 0 or minimum S | 1st State |
| | Active (SL) | Variable S | 2nd State |
| | Active (VR) | Maximum S (event) | 4th State |

| | | | |
|---|---|---|---|
| SL: Slow variation of the short-term average exceeding the reference level. VR: Quick variation of the short-term average. | | | |

The speed of the extractor motor at all times will be the higher one between the one required by the presence sensor and the one required by the air-quality sensor.

## Claims

1. A smart air extractor **characterised in that** it comprises:
• a propeller for suctioning air from an enclosed space,
• a motor for rotating the propeller,
• presence detection means to generate a first control signal when a user is present in the enclosed space,
• air-quality measuring means to generate a second control signal when an environmental parameter of the enclosed space, exceeds a reference environmental parameter, and
• a control unit configured to command the activation and deactivation of the motor and to regulate the rotation speed of the propeller of the motor according to the control signals generated by the presence detection means and the air-quality measuring means,
**characterised in that** the air-quality measuring means are configured to generate the second control signal by comparing a long-term moving average of the environmental parameter of the enclosed space with a short-term moving average of the environmental parameter of the enclosed space.

2. The smart air extractor, according to the preceding claim, **characterised in that** the control unit additionally comprises a memory for storing the environmental parameters of the enclosed space measured by the air-quality measuring means, the control unit being additionally configured to obtain the reference environmental parameter depending on the environmental parameters of the enclosed space measured by the air-quality measuring means.

3. The smart air extractor, according to any one of the preceding claims, **characterised in that** the air-quality measuring means are one or more sensors for measuring volatile organic compounds (VOC), humidity, or carbon dioxide.

4. The smart air extractor, according to any one of the preceding claims, **characterised in that** the environmental parameter of the enclosed space is relative humidity, concentration of carbon dioxide or concentration of volatile organic compounds in the enclosed space.

5. The smart air extractor, according to any one of the preceding claims, **characterised in that** it additionally comprises a timer, the control unit being additionally configured to maintain the motor activated for a predefined time which is established by the timer.

## Patentansprüche

1. Intelligenter Luftabsauger, **dadurch gekennzeichnet, dass** er umfasst:
• einen Propeller zum Ansaugen von Luft aus einem geschlossenen Raum,
• einen Motor zum Drehen des Propellers,
• Anwesenheitserkennungsmittel zum Erzeugen eines ersten Steuersignals, wenn ein Benutzer in dem geschlossenen Raum anwesend ist,
• Luftqualitäts-Messmittel zum Erzeugen eines zweiten Steuersignals, wenn ein Umgebungsparameter des geschlossenen Raums einen Referenzumgebungsparameter überschreitet, und
• eine Steuereinheit, die dazu ausgestaltet ist, die Aktivierung und Deaktivierung des Motors zu befehlen und die Drehgeschwindigkeit des Propellers des Motors gemäß den Steuersignalen, die von den Anwesenheitserkennungsmitteln und den Luftqualitäts-Messmitteln erzeugt werden, zu regulieren,
**dadurch gekennzeichnet, dass** die Luftqualitäts-Messmittel dazu ausgestaltet sind, das zweite Steuersignal zu erzeugen, indem ein langfristiger gleitender Durchschnitt des Umgebungsparameters des geschlossenen Raums mit einem kurzfristigen gleitenden Durchschnitt des Umgebungsparameters des geschlossenen Raums verglichen wird.

2. Intelligenter Luftabsauger nach dem vorhergehenden Anspruch, **dadurch gekennzeichnet, dass** die Steuereinheit zusätzlich einen Speicher zum Speichern der Umgebungsparameter des geschlossenen Raums, die von den Luftqualitäts-Messmitteln gemessen werden, umfasst, wobei die Steuereinheit zusätzlich dazu ausgestaltet ist, den Referenzumgebungsparameter in Abhängigkeit von den Umgebungsparametern des geschlossenen Raums, die von den Luftqualitäts-Messmitteln gemessen werden, zu erhalten.

3. Intelligenter Luftabsauger nach einem der vorhergehenden Ansprüche, **dadurch gekennzeichnet, dass** die Luftqualitäts-Messmittel ein oder mehrere Sensor/en zum Messen von flüchtigen organischen Verbindungen (VOC), Feuchtigkeit oder Kohlendioxid sind.

4. Intelligenter Luftabsauger nach einem der vorhergehenden Ansprüche,
**dadurch gekennzeichnet, dass** der Umgebungsparameter des geschlossenen Raums die relative Feuchtigkeit, Kohlendioxid-Konzentration oder Konzentration von flüchtigen organischen Verbindungen in dem geschlossenen Raum ist.

5. Intelligenter Luftabsauger nach einem der vorhergehenden Ansprüche, **dadurch gekennzeichnet, dass** er zusätzlich einen Zeitgeber umfasst, wobei die Steuereinheit zusätzlich dazu ausgestaltet ist, die Motoraktivierung für eine vorbestimmte Zeit, die durch den Zeitgeber festgelegt wird, aufrechtzuhalten.

## Revendications

1. Extracteur d'air intelligent **caractérisé en ce qu'**il comprend :
• une hélice pour aspirer l'air depuis un espace fermé,
• un moteur pour faire tourner l'hélice,
• un moyen de détection de présence pour générer un premier signal de commande quand un utilisateur est présent dans l'espace fermé,
• un moyen de mesure de qualité de l'air pour générer un deuxième signal de commande quand un paramètre environnemental de l'espace fermé dépasse un paramètre environnemental de référence, et
• une unité de commande configurée pour commander l'activation et la désactivation du moteur et pour réguler la vitesse de rotation de l'hélice du moteur en fonction des signaux de commande générés par le moyen de détection de présence et le moyen de mesure de qualité de l'air,
**caractérisé en ce que** le moyen de mesure de qualité de l'air est configuré pour générer le deuxième signal de commande en comparant une moyenne mobile à long terme du paramètre environnemental de l'espace fermé avec une moyenne mobile à court terme du paramètre environnemental de l'espace fermé.

2. Extracteur d'air intelligent selon la revendication précédente, **caractérisé en ce que** l'unité de commande comprend de plus une mémoire pour stocker les paramètres environnementaux de l'espace fermé, mesurés par le moyen de mesure de qualité de l'air, l'unité de commande étant de plus configurée pour obtenir le paramètre environnemental de référence en fonction des paramètres environnementaux de l'espace fermé, mesurés par le moyen de mesure de qualité de l'air.

3. Extracteur d'air intelligent selon l'une quelconque des revendications précédentes, **caractérisé en ce que** le moyen de mesure de qualité de l'air consiste en un ou plusieurs capteurs pour mesurer les composés organiques volatils (COV), l'humidité, ou le dioxyde de carbone.

4. Extracteur d'air intelligent selon l'une quelconque des revendications précédentes, **caractérisé en ce que** le paramètre environnemental de l'espace fermé est l'humidité relative, la concentration de dioxyde de carbone ou la concentration de composés organiques volatils dans l'espace fermé.

5. Extracteur d'air intelligent selon l'une quelconque des revendications précédentes, **caractérisé en ce qu'**il comprend de plus un minuteur, l'unité de commande étant de plus configurée pour maintenir le moteur activé pendant un temps prédéfini qui est établi par le minuteur.
